# EUROPÄISCHE PATENTANMELDUNG

(11) **EP 3 975 359 A1**
(43) Veröffentlichungstag der Anmeldung: **30.03.2022**
(21) Anmeldenummer: 20198686.6
(22) Anmeldetag: 28.09.2020
(51) Int. Cl.: H02G 3/08, E03D 11/14, H02G 3/12

(54) **ELEKTRODOSE**

(71) Anmelder: Geberit International AG, 8645 Jona (CH)
(72) Erfinder: RAISSLE, Daniel, 8852 Altendorf (CH); SALZMANN, Stefan, 8640 Rapperswil (CH)
(74) Vertreter: Frischknecht, Harry Ralph

(57) **Zusammenfassung**

Eine Elektrodose (1) für eine Sanitärinstallation (2) mit einem Sanitärartikel, umfasst
ein Gehäuse (3) mit einem Innenraum (4), der über eine Frontöffnung (18) zugänglich ist, und
eine im Innenraum (4) liegende Trennwand (5), welche den Innenraum (4) in einen ersten Raumbereich (6) und einen zweiten Raumbereich (7) aufteilt,
wobei in der Trennwand (5) ein elektrisches Kontaktelement (8) angeordnet ist, welches eine zum ersten Raumbereich (6) zugewandte erste Anschlussstelle (9) zum Anschluss an eine gebäudeseitige Elektroinstallation, wie eine Netzstrominstallation und/oder eine Gebäudeleittechnikinstallation, aufweist, und welches eine zum zweiten Raumbereich (7) zugewandte zweite Anschlussstelle (10) aufweist, und
wobei in der Trennwand (5) eine Aufnahme (11) vorhanden ist, in welche ein weiteres elektrisches Kontaktelement (12) einsetzbar ist.

## Beschreibung

### TECHNISCHES GEBIET

Die vorliegende Erfindung betrifft eine Elektrodose für den Einsatz in einem Sanitärraum, wie einem Badezimmer, nach dem Oberbegriff von Anspruch 1.

### STAND DER TECHNIK

Die Badezimmerfunktionen sind in jüngerer Vergangenheit komplexer geworden. Beispielhaft seien Dusch-WCs oder Toiletten mit Geruchsabsaugung genannt. Die zusätzlichen Funktionen benötigen eine entsprechende Stromversorgung. Beispielsweise für die Steuerung des Dusch-WC oder für einen Lüftermotor. Ferner steigt die Quote an berührungslosen und automatischne WC-Spülauslösungen aufgrund des Bewusstseins für Hygiene seit mehreren Jahren kontinuierlich an.

Oftmals fehlen allerdings Steckdosen und Stromanschlüsse in Badezimmern, welche einen Sanitärartikel mit Strom versorgen könnten. Es besteht daher ein Bedürfnis, Elektroanschlüsse in der Nähe von oder sogar am Montagerahmen vorzusehen. Ferner benötigen diese elektronischen Verbraucher eine Versorgung mit einer Kleinstspannung (z.B. Gleichspannung mit 12V). Hinzu kommt im Zuge von IoT und Smart Homes das Bedürfniss, diese Produkte untereinander un /oder mit einem übergeordneten System zu vernetzen.

Aus der EP 2 568 089 A1 ist eine WC-Anschlussvorrichtung in Form eines Montagerahmens für ein Dusch-WC bekannt, welche über eine elektrische Anschlusseinrichtung sowie eine Duschwasser-Anschlusseinrichtung verfügt. Bei der elektrischen Anschlusseinrichtung handelt es sich um eine Bohrung im Montagerahmen, durch welche eine elektrische Verbindung des Dusch-WCs mit einem sich hinter dem Montagerahmen befindlichen Elektroanschluss ermöglicht wird.

Nachteilig bei solchen Vorrichtungen ist jedoch, dass die Installation und/oder die Wartung eines Dusch-WCs Fachkräfte aus unterschiedlichen Gewerben bzw. Gewerken benötigt.

Diesbezüglich schafft die technische Lehre der EP 3 530 825 Abhilfe. In dieser Druckschrift wird eine Elektrodose offenbart, welche nach erstmaliger Installation durch einen Elektriker durch jede beliebige Person, insbesondere durch einen Sanitärinstallateur, gewartet werden kann. Obwohl sich die Elektrodose gemäss der EP 3 530 825 als sehr bedienerfreundlich ausgewiesen hat, ergeht der Wunsch eine Elektrodose zu schaffen, welche unter der Massgabe einer einfacheren Wartung vielseitiger einsetzbar ist.

### DARSTELLUNG DER ERFINDUNG

Ausgehend von diesem Stand der Technik liegt der Erfindung eine Aufgabe zugrunde, eine Elektrodose für einen Sanitärartikel zu schaffen, welche die Nachteile des Standes der Technik überwindet. Eine besonders bevorzugte Aufgabe ist es, eine Elektrodose zu schaffen, welche flexibler einsetzbar ist.

Diese Aufgabe löst eine Elektrodose für eine Sanitärinstallation mit einem Sanitärartikel nach Anspruch 1. Demgemäss umfasst eine Elektrodose ein Gehäuse mit einem Innenraum, der über eine Frontöffnung zugänglich ist, und eine im Innenraum liegende Trennwand, welche den Innenraum in einen ersten Raumbereich und einen zweiten Raumbereich aufteilt. In der Trennwand ist ein elektrisches Kontaktelement angeordnet, welches eine zum ersten Raumbereich zugewandte erste Anschlussstelle zum Anschluss an eine gebäudeseitige Elektroinstallation, wie eine Netzstrominstallation und/oder eine Gebäudeleittechnikinstallation, aufweist, und welches eine zum zweiten Raumbereich zugewandte zweite Anschlussstelle aufweist. In der Trennwand ist weiter eine Aufnahme vorhanden, in welche ein weiteres elektrisches Kontaktelement einsetzbar ist.

Durch die Aufnahme in der Trennwand wird die Möglichkeit geschaffen, ein weiteres elektrisches Kontaktelement an der Trennwand anzuordnen, wodurch die Elektrodose für verschiedene Anwendungen vielseitiger und flexibler einsetzbar ist.

Das weitere elektrische Kontaktelement weist eine zum ersten Raumbereich zugewandte erste Anschlussstelle zum Anschluss an eine gebäudeseitige Elektroinstallation, wie eine Netzstrominstallation und/oder eine Gebäudeleittechnikinstallation, auf, und eine zum zweiten Raumbereich zugewandte zweite Anschlussstelle auf.

Je nach Anwendung kann nur eines der beiden Kontaktelemente oder beide Kontaktelemente in der Trennwand angeordnet sein.

Die Aufnahme ist vorzugsweise eine Ausnehmung bzw. eine Durchgangsöffnung in der Trennwand, in welche das weitere elektrische Kontaktelement eingesetzt werden kann.

Vorzugsweise erstreckt sich bei nicht eingesetztem weiteren elektrischen Kontaktelement ein Wandabschnitt derart über die Aufnahme, dass sich die Trennwand über die Aufnahme fortsetzt.

Besonders bevorzugt erstreckt sich der Wandabschnitt vollständig oder im Wesentlichen vollständig über die gesamte Fläche der Aufnahme.

Besonders bevorzugt ist der Wandabschnitt als ein von der Aufnahme heraustrennbarer Wandabschnitt ausgebildet. Der Wandabschnitt ist dabei derart ausgebildet, dass bei herausgetrenntem Wandabschnitt die Aufnahme eine Durchgangsöffnung bereitstellt, so dass das weitere elektrische Kontaktelement durch die Durchgangsöffnung sich durch die Trennwand hindurch erstreckt.

Vorzugsweise ist im zweiten Raumbereich weiterhin mindestens ein Elektroelement angeordnet, welches Elektroelement eine elektrische Schnittstelle aufweist, die mit der zweiten Anschlussstelle des elektrischen Kontaktelementes oder des weiteren elektrischen Kontaktelements über eine Steckverbindung elektrisch verbindbar ist, und welches Elektroelement über ein Leiterelement mit einem Sanitärartikel verbindbar ist.

Vorzugsweise ist der erste Raumbereich durch mindestens eine Öffnung zugänglich, derart, dass Leiterelement in den ersten Raumbereich führbar sind.

Vorzugsweise bilden jeweils zwei in der gleichen Seitenwand benachbart zueinander liegende Öffnungen ein Öffnungspaar, wobei vorzugsweise in zwei bezüglich des ersten Raumbereichs gegenüberliegenden Seitenwänden je ein Öffnungspaar angeordnet ist.

Vorzugsweise ist das Elektroelement ein Netzteil, ein Transformator, eine Batterie, ein Kommunikationselement, ein mit der Gebäudeleittechnik zusammenarbeitendes Element oder ein Konverter.

Ein Set umfasst eine Elektrodose nach obiger Beschreibung, wobei die Elektrodose zwei unterschiedliche Trennwände umfasst, wobei eine Trennwand eine Aufnahme aufweist und wobei die andere Trennwand zwei Aufnahmen aufweist.

Eine Verschaltungsanordnung umfasst eine Elektrodose nach obiger Beschreibung und ein Elektrorohr. Das Elektrorohr steht mit einer der besagten Öffnungen in Verbindung. Das Elektrorohr führt vorzugsweise zu einem Dusch-WC.

Vorzugsweise ist die Öffnung neben der Öffnung mit dem Elektrorohr für die Zuführung eines 230-Volt-Kabels vorgesehen und die gegenüber dem Aufnahmeraum liegenden Öffnungen sind für die Zuführung eines Daten- und/oder eines Buskabels vorgesehen.

Eine Sanitärinstallation für einen Sanitärartikel, insbesondere ein WC oder Dusch-WC, umfasst:
- eine Elektrodose zur Stromversorgung des Sanitärartikels nach obiger Beschreibung,
- einen Montagerahmen und
- ein Elektrorohr
wobei die Elektrodose fest mit dem Montagerahmen in Verbindung steht und wobei das Elektrorohr in Einbaulage von der Elektrodose nach unten geführt wird, und derart liegt, dass das Elektrorohr einer am Montagerahmen zu befestigende Toilettenschüssel zuführbar ist.

Vorzugsweise umfasst die Sanitärinstallation weiterhin
- eine Spülrohr-Aufnahme zur Aufnahme eines Spülrohrs zum Zuleiten von Spülwasser in den Sanitärartikel;
- ein Befestigungsmittel zur Aufnahme und Befestigung eines Abflussrohrs zum Ableiten von Abwasser aus dem Sanitärartikel am Montagerahmen; und
- mindestens eine erste und eine zweite Befestigungseinrichtung zur Befestigung des Sanitärartikels am Montagerahmen
umfasst.

Die Spülrohr-Aufnahme, das Befestigungsmittel sowie die erste und zweite Befestigungseinrichtung definieren einen Zwischenraum, wobei die Elektrodose im Zwischenraum angeordnet ist, und wobei das besagte Elektrorohr seitlich neben dem Zwischenraum nach unten geführt wird.

Vorzugsweise wird der Zwischenraum durch zwei senkrechte Ebenen, welche senkrecht durch die erste beziehungsweise zweite Befestigungseinrichtung verlaufen, und durch zwei horizontale Ebenen, welche horizontal durch die Spülrohr-Aufnahme beziehungsweise das Befestigungsmittel verlaufen, definiert, wobei der Zwischenraum vorzugsweise derart angeordnet ist, dass er im Einbauzustand des Montagerahmens frei zugänglich ist, und wobei der Zwischenraum im Einbauzustand, im Falle eines mit dem Montagerahmen verbundenen Sanitärartikels, vorzugsweise durch den Sanitärartikel überdeckt wird.

In der Folge werden weitere bevorzugte Merkmale der Elektrodose genauer erläutert:
Vorzugsweise ist die Elektrodose derart ausgebildet, dass die zweite Anschlussstelle Anschlussbuchsen umfasst und dass die Schnittstelle Anschlussstifte aufweist, welche in die Anschlussbuchsen einschiebbar sind; oder dass die zweite Anschlussstelle und die Schnittstelle als Flachkontakte ausgebildet sind, wobei vorzugsweise einer der Flachkontakte durch ein gefedertes Kontaktelement bereitgestellt wird.

Vorzugsweise ist die Elektrodose derart ausgebildet, dass die Trennwand in den Innenraum einsetzbar ist; oder dass die Trennwand einen integralen Bestandteil des Gehäuses ist.

Vorzugsweise ist die Elektrodose derart ausgebildet, dass die Trennwand durch einen über die Frontöffnung in den Innenraum einsetzbaren Einsatz bereitgestellt wird.

Vorzugsweise ist die Elektrodose derart ausgebildet, dass das Gehäuse aussenseitig mindestens ein Rastelement aufweist, mit welchem das Gehäuse mit der Sanitärinstallation, insbesondere mit einem Montagrahmen verbindbar ist.

Vorzugsweise ist die Elektrodose derart ausgebildet, dass das Gehäuse an einer ihrer Seitenwände eine Einbuchtung aufweist, die derart ausgebildet ist, dass Raum für die Durchführung eines Abflussrohrs der Sanitärinstallation geschaffen wird.

Vorzugsweise ist die Elektrodose derart ausgebildet, dass die Einbuchtung mittig zwischen zwei gegenüberliegenden Seitenwänden des Gehäuses angeordnet ist und/oder dass sich die Einbuchtung in den Innenraum hineinerstreckt und den Innenraum verkleinert. Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsansicht der Elektrodose nach einer Ausführungsform der vorliegenden Erfindung gemäss einer ersten Konfiguration von vorne
- Fig. 2: eine perspektivische Explosionsansicht der Elektrodose gemäss Figur 1 von hinten;
- Fig. 3: eine bevorzugte Verschaltung eines in der Elektrodose eingesetzten Elektroelement nach den Figuren 1 und 2;
- Fig. 4: eine perspektivische Explosionsansicht der Elektrodose nach der Ausführungsform der Figur 1 gemäss einer zweiten Konfiguration;
- Fig. 5: eine perspektivische Explosionsansicht der Elektrodose gemäss Figur 4 von hinten;
- Fig. 6: eine bevorzugte Verschaltung eines in der Elektrodose eingesetzten Elektroelement nach den Figuren 4 und 5;
- Fig. 7: eine Schnittansicht durch die Elektrodose gemäss der vorliegenden Erfindung;
- Fig. 8: eine perspektivische Frontansicht einer Sanitärinstallation mit einer Elektrodose gemäss den vorhergehenden Figuren;
- Fig. 9: eine perspektivische Rückansicht der Sanitärinstallation nach Figur 8;
- Fig. 10: eine perspektivische Frontansicht einer Sanitärinstallation mit einer Elektrodose gemäss den vorhergehenden Figuren; und
- Fig. 11: eine perspektivische Rückansicht der Sanitärinstallation nach Figur 9.

### BESCHREIBUNG BEVORZUGTER AUSFÜHRUNGSFORMEN

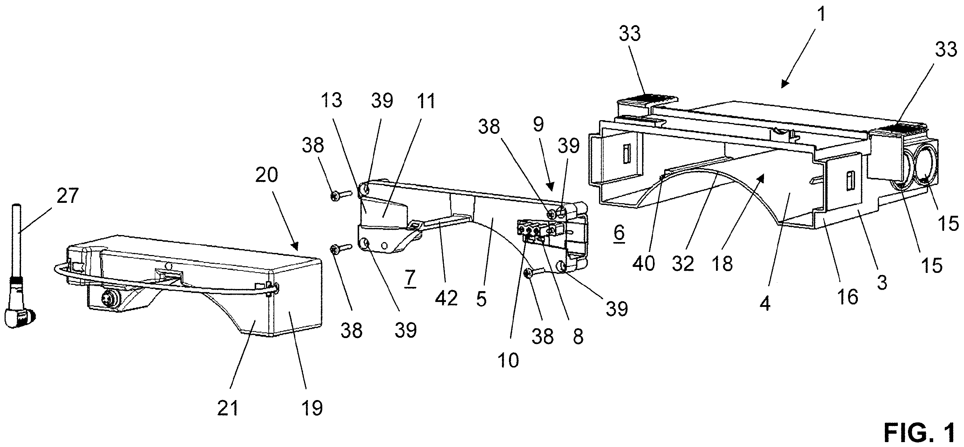

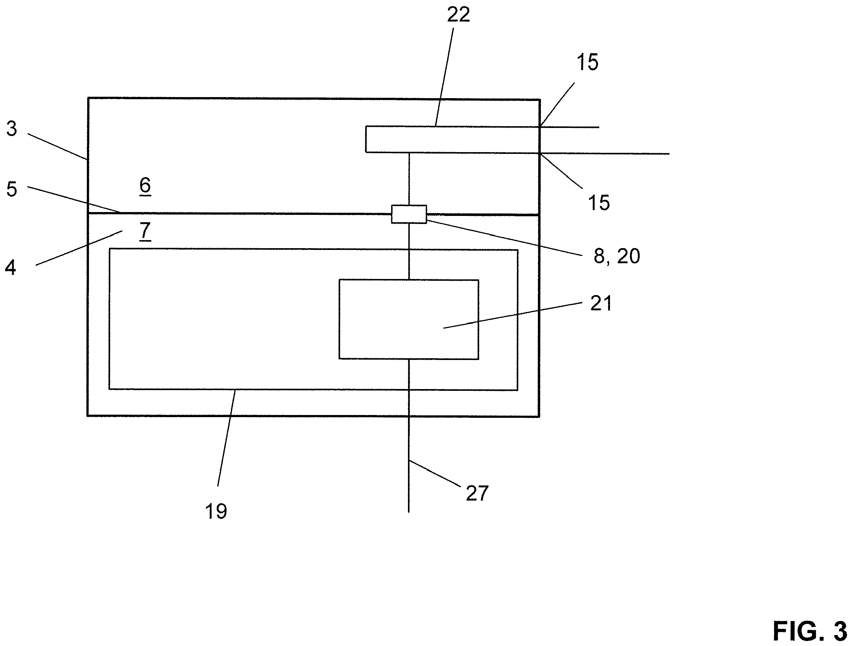

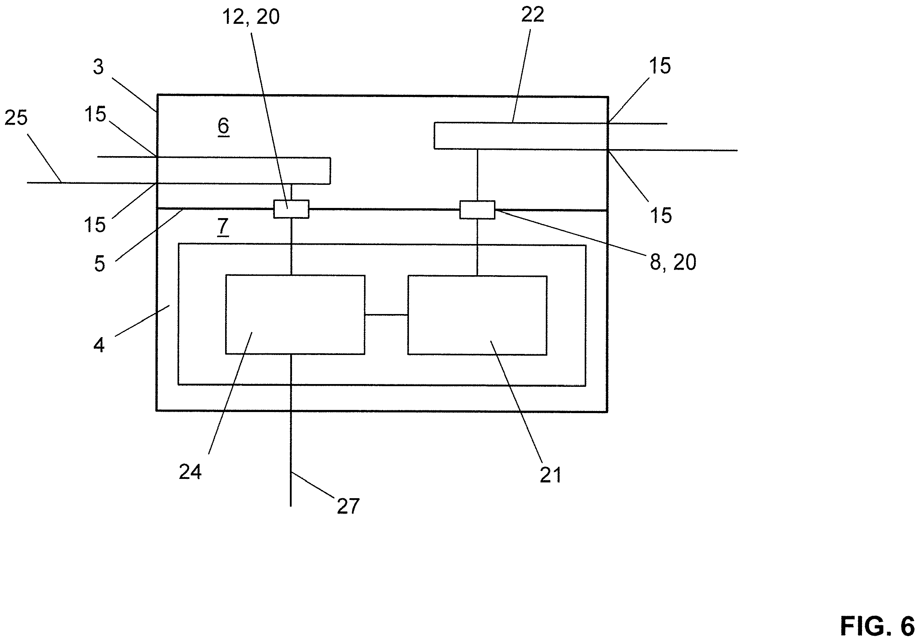

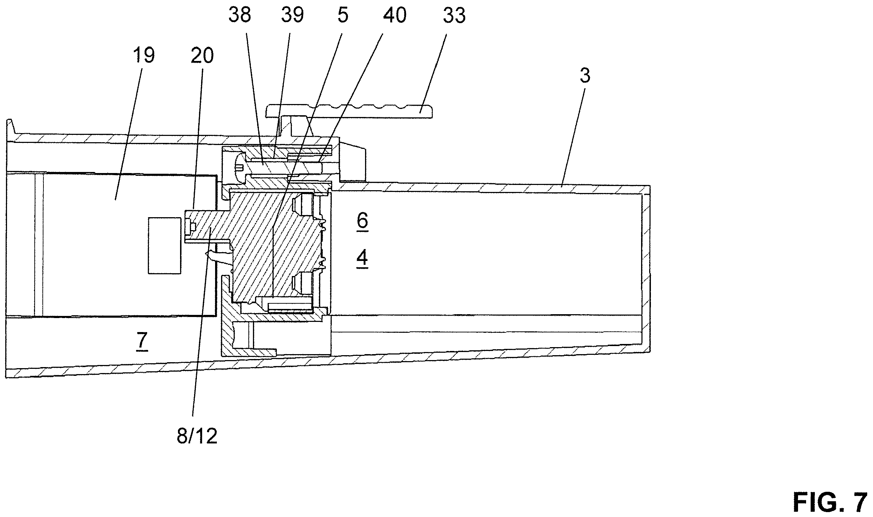

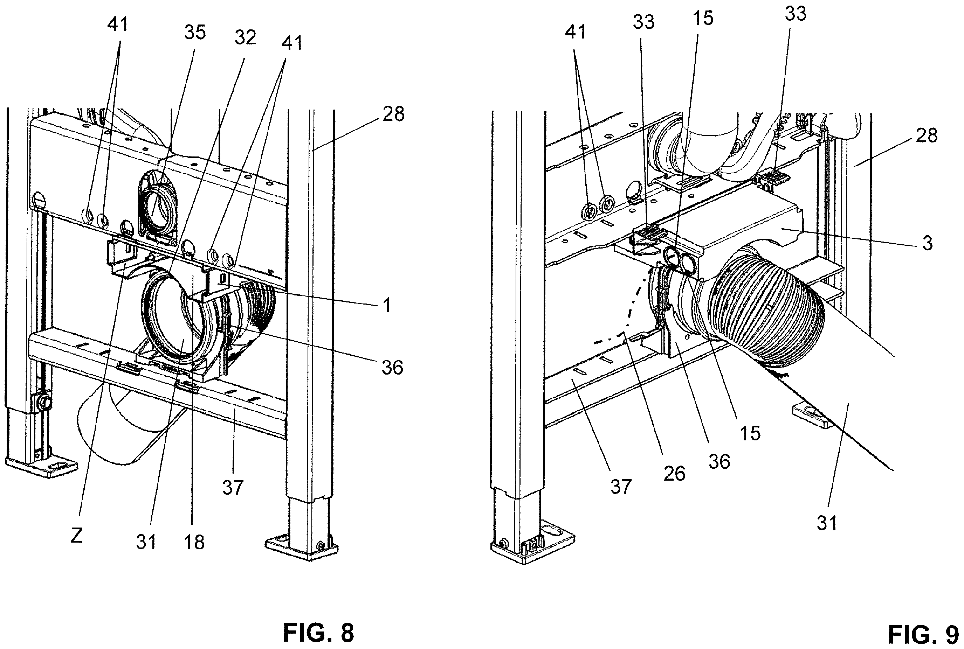

In den Figuren 1 bis 2 und 4 bis 5 werden Explosionsansichten einer Elektrodose 1 für eine Sanitärinstallation 2 gezeigt. Die Figuren 3 und 6 zeigen jeweils eine schematische Ansicht einer möglichen Verschaltung der Elektrodose 1 gemäss den Figuren 1 bis 2 bzw. 4 bis 5. In der Figur 7 wird eine Schnittdarstellung der Elektrodose 1 gezeigt. Die Figuren 8 bis 11 zeigen die Elektrodose 1 im Zusammenhang mit einer Sanitärinstallation 2, die hier mit einem Montagerahmen 28 gezeigt. Die Elektrodose 1 dient der Versorgung eines Sanitärartikels, der Teil der Sanitärinstallation 2 ist, mit elektrischer Energie oder mit Steuerungssignalen. Der Sanitärartikel kann ein beliebiger Sanitärartikel sein. Beispielsweise wird hier ein Dusch-WC, ein Spülsystem, ein Waschtisch oder eine Auslaufarmatur genannt.

Unter Bezugnahme auf die Figuren 1 bis 7 wird nun der Aufbau der Elektrodose 1 erläutert. Die Elektrodose 1 umfasst ein Gehäuse 3 mit einem Innenraum 4, der über eine Frontöffnung 18 zugänglich ist, und eine im Innenraum 4 liegende Trennwand 5, welche sich vollständig quer durch den Innenraum 4 erstreckt und den Innenraum 4 in einen ersten Raumbereich 6 und einen zweiten Raumbereich 7 aufteilt. Die Aufteilung der beiden Raumbereiche 6, 7 kann in der Schnittdarstellung der Figur 7 gut erkannt werden.

In der Trennwand 5 ist ein elektrisches Kontaktelement 8 angeordnet. Das elektrische Kontaktelement 8 weist eine zum ersten Raumbereich 6 zugewandte erste Anschlussstelle 9 auf. Weiter weist das elektrische Kontaktelement 8 eine zum zweiten Raumbereich 7 zugewandte zweite Anschlussstelle 10 auf.

Weiter weist die Trennwand 5 eine Aufnahme 11 auf, in welche ein weiteres elektrisches Kontaktelement 12 einsetzbar ist. Die Aufnahme 11 liegt hier gegenüber des elektrischen Kontaktelements 8.

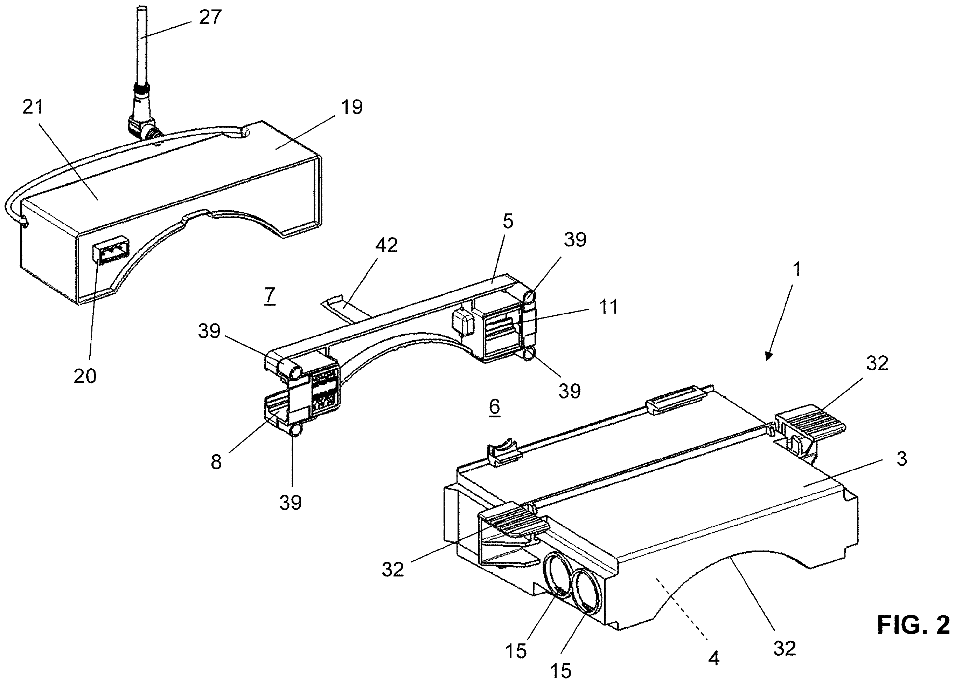

In der ersten Konfiguration der Figuren 1 und 2 ist in der Aufnahme kein Kontaktelement 12 eingesetzt. Bei nicht eingesetztem weiteren elektrischen Kontaktelement 12 erstreckt sich ein Wandabschnitt 13 über die Aufnahme 11, derart, dass sich die Trennwand 5 über die Aufnahme 11 fortsetzt. Vorzugsweise ist der Wandabschnitt 13 als von der Aufnahme 11 heraustrennbarer Wandabschnitt 13 ausgebildet. Hierbei ist der Wandabschnitt derart ausgebildet, dass bei herausgetrenntem Wandabschnitt 13 die Aufnahme eine Durchgangsöffnung 14 bereitstellt, so dass das weitere elektrische Kontaktelement 12 durch die Durchgangsöffnung 14 sich durch die Trennwand 5 hindurch erstreckt.

Der Wandabschnitt 13 ist vorzugsweise ein Wandabschnitt mit einer etwas geringeren Wandstärke als die dem Wandabschnitt 13 benachbarten Bereiche der Trennwand 5. Alternativerweise oder zusätzlich kann der Wandabschnitt 13 über Sollbruchstellen mit den benachbarten Bereichen der Trennwand 5 verbunden sein, so dass der Wandabschnitt 13 einfach von der Trennwand 5 abgetrennt werden kann. Auch wäre es denkbar, dass zwei unterschiedliche Arten von Trennwänden hergestellt werden, wobei dann je nach Anwendungszweck die eine Trennwand 5 mit dem Wandabschnitt 13 oder die andere Trennwand 5 ohne den Wandabschnitt 13 eingesetzt wird.

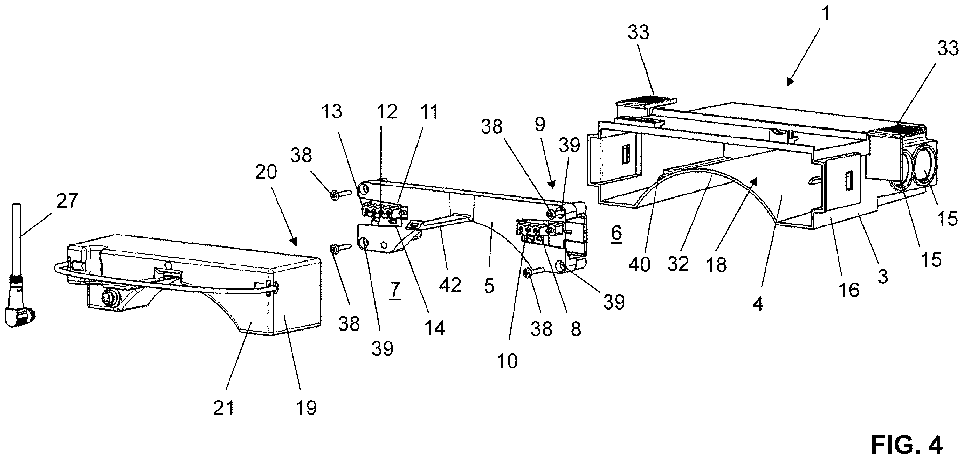

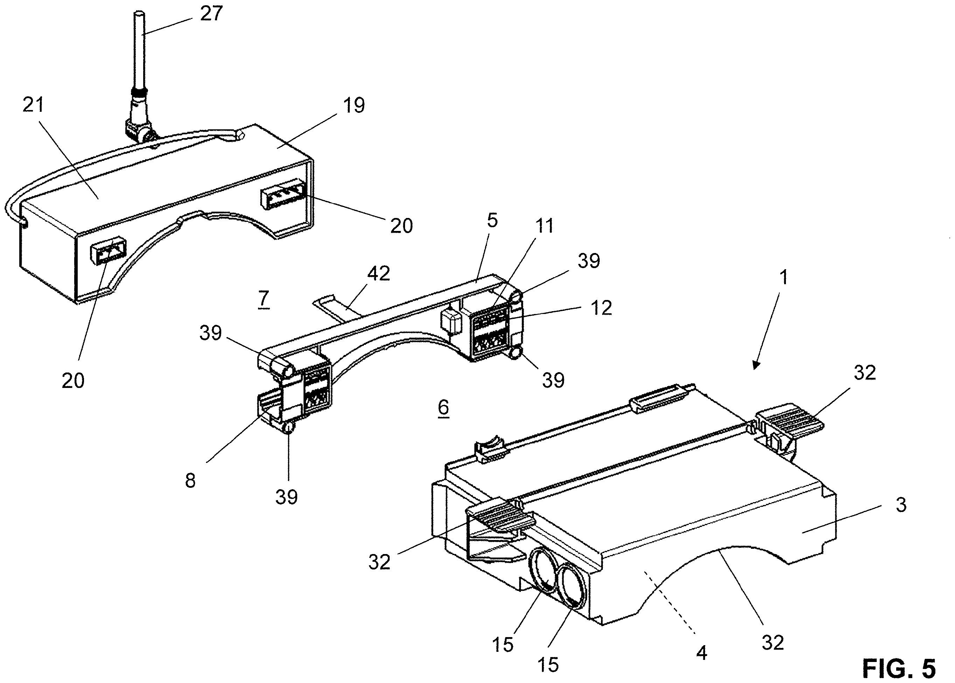

In der zweiten Konfiguration nach den Figuren 4 und 5 ist der Wandabschnitt 13 von der Trennwand getrennt und in der Aufnahme 11 ist das weitere Kontaktelement 12 eingesetzt.

In der gezeigten Ausführungsform ist die Trennwand 5 in den Innenraum 4 einsetzbar. Das heisst, die Trennwand 5 kann in den Innenraum 4 bei der Montage eingesetzt werden. Die Trennwand 5 erstreckt sich dabei über den vollständigen Querschnitt des Innenraums 4, so dass die beiden Raumbereiche 6, 7 voneinander getrennt sind. Das heisst, ein Benutzer hat keinen Zugang zum zweiten Raumbereich 7, wenn die Trennwand 5 im Innenraum 4 liegt. Dies betrifft insbesondere der Zugang vom ersten Raumbereich 6 her gesehen. Die Trennwand 5 wird über Schrauben 38, welche durch Schraubenlöcher 39 an der Trennwand 5 hindurchgeführt werden und in am Gehäuse liegende Gewinde 40 eingreifen, im Innenraum 4 gehalten.

Jedes der beiden elektrischen Kontaktelemente 8, 12 weist eine erste Anschlussstelle 9 und eine zweite Anschlussstelle 10 auf. Die erste Anschlussstelle 9 dient dem Anschluss des elektrischen Kontaktelementes 8, 12 an eine gebäudeseitige Elektroinstallation, wie beispielsweise Netzstrominstallation und/oder eine Gebäudeleittechnikinstallation. Die zweite Anschlussstelle 11 dient als Kontaktstelle zur elektrischen Verbindung mit einem Elektroelement 19.

Die erste Anschlussstelle 9 weist in der gezeigten Ausführungsform die Gestalt einer Anschlussklemme mit mehreren Klemmabschnitten auf. Dabei können einzelne Litzen eines Kabels mit den Klemmabschnitten verbunden werden. Die Litzen werden dann zum Kontaktelement 8 entsprechend mechanisch geklemmt. Diese Klemmung kann entweder werkseitig vorbereitet werden oder aber bauseitig direkt vor Ort durch den Elektriker vorgenommen werden. Die zweite Anschlussstelle 10 umfasst in der gezeigten Ausführungsform mehrere Anschlussbuchsen. Eine elektrische Schnittstelle 20 auf Seiten des Elektroelementes 11 weist die Form von Anschlussstiften auf. Die Anschlussstifte können dabei bei der Herstellung der Steckverbindung in die Anschlussbuchsen eingeführt werden.

Das Elektroelement 19 ist im zweiten Raumbereich 7 platzierbar. Das Elektroelement 19 wird hier über ein an der Trennwand 5 angeformten Schnapper 42 im Gehäuse 2 gehalten. Das Elektroelement 19 ist vorzugsweise ein Netzteil oder ein Transformator oder eine Batterie oder ein Kommunikationselement oder ein mit der Gebäudeleittechnik zusammenarbeitendes Element. Sobald nun das Kontaktelement 8 und ggf. das weitere Kontaktelement 12 über die erste Anschlussstelle 9 mit der gebäudeseitigen Elektroinstallation in Verbindung steht, ist ein problemloser Einbau des Elektroelementes 19 aufgrund der Steckverbindung zwischen Elektroelement 19 und den Kontaktelementen 8, 12 möglich. Gleiches gilt für den Austausch in einem Wartungsfall. Da es jedermann möglich ist, eine Steckverbindung herzustellen bzw. zu trennen, kann dies vom Benutzer selbst oder vom Sanitärinstallateur ohne Zuhilfenahme eines Elektrikers vorgenommen werden.

Das Elektroelement 19 ist über ein Leiterelement 27 mit einem Sanitärartikel verbindbar. Das Leiterelement 27 ist hier als Kabel dargestellt. Das Leiterelement 27 kann aber auch eine drahtlose Verbindung sein.

Aussenseitig weist das Gehäuse 3 mindestens ein Rastelement 33 auf. Mit dem mindestens einen Rastelement 33 ist das Gehäuse 3 mit einem Montagerahmen 28 der Sanitärinstallation 2 verbindbar.

Das Gehäuse 2 weist weiter an einer ihrer Seitenwände 16 eine Einbuchtung 32 auf. Die Einbuchtung 32 ist hier im unteren Bereich des Gehäuses 3 angeordnet. Die Einbuchtung 32 ist derart ausgebildet, dass Raum für die Durchführung eines Abflussrohrs 31 der Sanitärinstallation 2 geschaffen wird. Diese Durchführung kann in den Figuren 8 bis 11 gut erkannt werden. Das Abflussrohr 31 liegt dabei unterhalb des Gehäuses 3 und wird durch die Einbuchtung 32 hindurchgeführt. Diese Ausbildung hat den Vorteil, dass der zur Verfügung stehende Raum optimal genutzt werden kann. Die Einbuchtung 32 ist in der gezeigten Ausführungsform mittig zwischen zwei gegenüberliegenden Seitenwänden des Gehäuses 3 angeordnet. Weiter erstreckt sich die Einbuchtung in den Innenraum 4 hinein und verkleinert so den Innenraum 4. Die Einbuchtung 32 hat hier Gestalt einer konkaven Krümmung.

In der Figur 3 wird schematisch das Elektroelement 19 gemäss den Figuren 1 und 2 gezeigt. Wie erwähnt liegt das Elektroelement 19 im zweiten Raumbereich 7 vor der Trennwand 5. Das Elektroelement 19 weist eine elektrische Schnittstelle 20 auf, die mit der zweiten Anschlussstelle 10 des elektrischen Kontaktelementes 8 über eine Steckverbindung elektrisch verbindbar ist. Die Steckverbindung kann durch eine lineare Bewegung zwischen Elektroelement 19 und Kontaktelement 8 hergestellt bzw. getrennt werden. Hierbei wird das Elektroelement 19 in den zweiten Raumbereich 7 eingeschoben bzw. herausbewegt.

Das Elektroelement 19 gemäss den Figuren 1 bis 3 ist vorzugsweise ein Netzteil 21. In der gezeigten Ausführungsform weist das Elektroelement 19 ein am Netzteil 21 angeschlossenes Leiterelement 27 in der Form eines Anschlusskabels auf, mit welchem das Netzteil 21 mit einer Sanitärarmatur verbunden werden kann. Die Sanitärarmatur kann hier beispielsweise eine Geruchsabsaugung oder eine Beleuchtung im Bereich einer Betätigungsplatte sein. Das Netzteil 21 wird typischerweise über ein Netzspannungskabel 22 mit Netzspannung versorgt. Das Netzteil 21 transformiert die Netzspannung in eine Niederspannung. Die Netzspannung ist beispielsweise 230 V Wechselstrom und die Niederspannung ist im Bereich von 4 Volt bis 15 Volt Gleichstrom.

In der Figur 6 wird schematisch das Elektroelement 19 gemäss den Figuren 3 und 4 gezeigt. Wie erwähnt liegt das Elektroelement 19 im zweiten Raumbereich 7 vor der Trennwand 5. Das Elektroelement 19 weist eine elektrische Schnittstelle 20 und eine weitere elektrische Schnittstelle 23 auf, die jeweils mit der zweiten Anschlussstelle 10 des elektrischen Kontaktelementes 8 und des weiteren elektrischen Kontaktelements 12 über eine Steckverbindung elektrisch verbindbar ist. Die Steckverbindung kann durch eine lineare Bewegung zwischen Elektroelement 19 und den Kontaktelementen 8, 12 hergestellt bzw. getrennt werden. Hierbei wird das Elektroelement 19 in den zweiten Raumbereich 7 eingeschoben bzw. herausbewegt.

Das Elektroelement 19 gemäss den Figuren 3 und 4 ist vorzugsweise ein kombiniertes Elektroelement, welches ein Netzteil 21 sowie einen Konverter 24 aufweist. Das Netzteil 21 wird typischerweise über ein Netzspannungskabel 22 mit Netzspannung versorgt. Das Netzteil 21 transformiert die Netzspannung in eine Niederspannung. Die Netzspannung ist beispielsweise 230 V Wechselstrom und die Niederspannung ist im Bereich von 4 Volt bis 15 Volt Gleichstrom. Der Konverter wird mit der Niederspannung versorgt und steht über weiter in elektrischer Verbindung mit einer Datenleitung 25, wie mit einer Ethernet-Leitung oder einer Busleitung. Auch hier weist das Elektroelement 19 ein Leiterelement 27 auf, mit welchem der Konverter 24 mit einer Sanitärarmatur verbunden werden kann. Das Leiterelement 27 stellt die besagte Niederspannung bereit. Die Sanitärarmatur kann hier beispielsweise eine Geruchsabsaugung oder eine Beleuchtung im Bereich einer Betätigungsplatte sein.

Von den Figuren 1 bis 6 kann gut erkannt werden, dass der erste Raumbereich 6 durch mindestens eine Öffnung 15 zugänglich ist. Durch die mindestens eine Öffnung 15 können Versorgungskabel, insbesondere das oben beschriebene Netzspannungskabel und/oder die Datenleitung 25, in den ersten Raumbereich 6 geführt werden. Im ersten Raumbereich 6 werden die Versorgungskabel dann mit dem ersten elektrischen Kontaktelement 8 und wenn vorhanden mit dem weiteren elektrischen Kontaktelement 12 verbunden.

In der gezeigten Ausführungsform bilden jeweils zwei in der gleichen Seitenwand 16 benachbart zueinander liegende Öffnungen 15 ein Öffnungspaar. In der gezeigten Ausführungsform ist jeweils in zwei bezüglich des ersten Raumbereichs 6 gegenüberliegenden Seitenwänden 16 je ein Öffnungspaar angeordnet.

In einer Verschaltungsanordnung mit einer Elektrodose nach obiger Beschreibung und einem Elektrorohr ragt das Elektrorohr von einer der Öffnung 15 weg. Das Elektrorohr wird vorzugsweise zu einem Dusch-WC oder einem anderen Sanitärelement geführt. Typischerweise wird dabei das Netzspannungskabel 22 aus dem ersten Raumbereich 6 durch das Elektrorohr zum Dusch-WC geführt. In der Figur 9 ist das Elektrorohr mit einer Strich-Punkt-Linie 26 schematisch dargestellt.

Vorzugsweise ist die Öffnung neben der Öffnung mit dem Elektrorohr für die Zuführung eines 230-Volt-Kabels vorgesehen. Die gegenüber dem Aufnahmeraum liegenden Öffnungen sind vorzugsweise für die Zuführung eines Daten- und/oder eines Buskabels vorgesehen.

Die Figuren 8 bis 11 zeigen verschiedene Ansichten einer Sanitärinstallation 2 für die Lagerung eines Sanitärartikels. Insbesondere für die Lagerung eines Dusch-WC. Die Sanitärinstallation umfasst eine Elektrodose 1 gemäss obiger Beschreibung. Die Elektrodose 1 dient der Versorgung des Sanitärartikels. Weiter umfasst die Sanitärinstallation 2 einen Montagerahmen 28 und ein Elektrorohr, welches in der Figur 9 durch eine Strich-Punkt-Linie 26 schematisch dargestellt ist. Die Elektrodose 1 steht fest mit dem Montagerahmen 28 in Verbindung. Das Elektrorohr wird in Einbaulage gesehen von der Elektrodose 1 nach unten geführt, und liegt derart, dass das Elektrorohr einer am Montagerahmen 28 zu befestigende Toilettenschüssel zuführbar ist.

Im Montagerahmen 28 ist hier ein Spülkasten 29 mit einer Betätigungsstruktur 30 sowie ein Abflussrohr 31 gelagert. Der Montagerahmen 28 kann aber auch der Aufnahme von anderen Elementen dienen. Die Elektrodose 1 liegt hier oberhalb des Abflussrohrs 31, welches sich durch die besagte Einbuchtung 32 der Elektrodose 1 hindurch erstreckt. Die Elektrodose 1 steht in der gezeigten Ausführungsform über die Rastelemente 33 mit einer Quertraverse 34 des Montagerahmens 28 in einer Rastverbindung. Die Quertraverse 34 dient hier weiter der Lagerung eines Spülrohrs 35. Das Abflussrohr 31 wird über eine Rohrschellenanordnung 36 an einer Quertraverse 37 des Montagerahmens 28 entsprechend mechanisch gehalten. Weiter umfasst der Montagerahmen 28 mindestens eine erste und eine zweite Befestigungseinrichtung 41 zur Befestigung des Sanitärartikels am Montagerahmen 28.

Die Elektrodose ist hier in einem Zwischenraum Z oberhalb des Abflussrohrs 31 angeordnet. Der Zwischenraum Z liegt vorzugsweise derart, dass dieser durch einen mit dem Montagerahmen 28 verbundenen Sanitärartikel überdeckt ist. Bei Wartungsarbeiten kann der Sanitärartikel entsprechend entfernt werden, wodurch der Zugang zum Zwischenraum Z und der darin liegenden Elektrodose geschaffen wird.

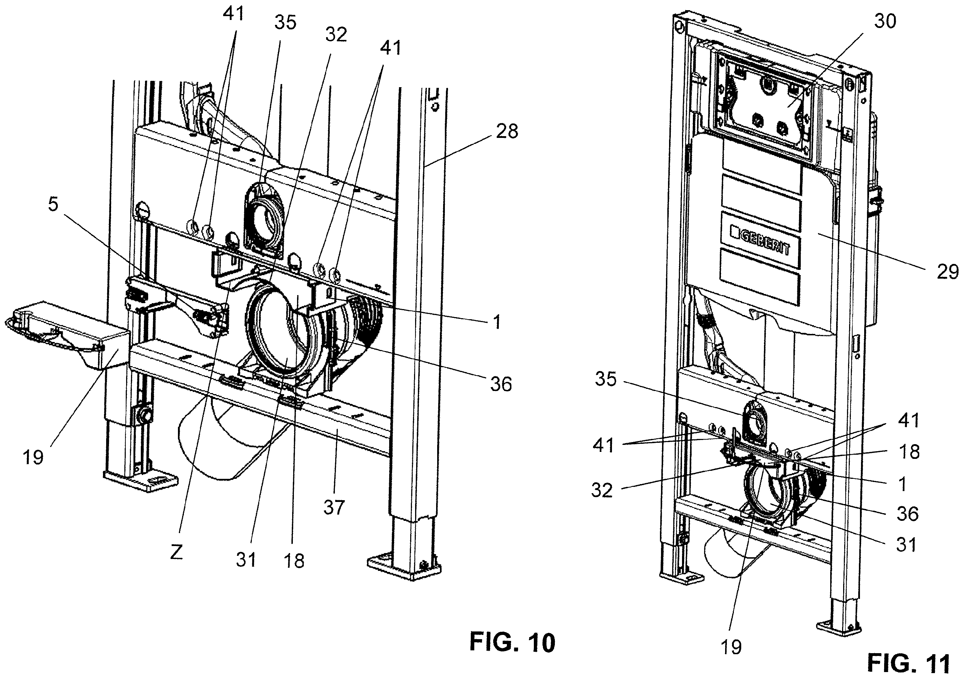

In der Figur 10 werden die Trennwand 5 und das Elektroelement 19 ausserhalb des Innenraums 4 gezeigt und in der Figur 11 wird die Trennwand 5 und das Elektroelement 19 innerhalb des Innenraums 4 gezeigt.

**BEZUGSZEICHENLISTE**

| | | | |
|---|---|---|---|
| 1 | Elektrodose | | Schnittstelle |
| 2 | Sanitärinstallation | 24 | Konverter |
| 3 | Gehäuse | 25 | Datenleitung |
| 4 | Innenraum | 26 | Strich-Punkt-Linie |
| 5 | Trennwand | 27 | Leiterelement |
| 6 | erster Raumbereich | 28 | Montagerahmen |
| 7 | zweiter Raumbereich | 29 | Spülkasten |
| 8 | elektrisches Kontaktelement | 30 | Betätigungsstruktur |
| 9 | erste Anschlussstelle | 31 | Abflussrohr |
| 10 | zweite Anschlussstelle | 32 | Einbuchtung |
| 11 | Aufnahme | 33 | Rastelemente |
| 12 | weiteres elektrisches Kontaktelement | 34 | Quertraverse |
| | | 35 | Spülrohr |
| 13 | Wandabschnitt | 36 | Rohrschellenanordnung |
| 14 | Durchgangsöffnung | 37 | Quertraverse |
| 15 | Öffnung | 38 | Schraube |
| 16 | Seitenwand | 39 | Schraubenlöcher |
| 18 | Frontöffnung | 40 | Gewinde |
| 19 | Elektroelement | 41 | Befestigungseinrichtung |
| 20 | elektrische Schnittstelle | 42 | Schnapper |
| 21 | Netzteil | | |
| 22 | Netzspannungskabel | Z | Zwischenraum |
| 23 | weitere elektrische | | |

## Patentansprüche

1. Elektrodose (1) für eine Sanitärinstallation (2) mit einem Sanitärartikel, umfassend
ein Gehäuse (3) mit einem Innenraum (4), der über eine Frontöffnung (18) zugänglich ist, und
eine im Innenraum (4) liegende Trennwand (5), welche den Innenraum (4) in einen ersten Raumbereich (6) und einen zweiten Raumbereich (7) aufteilt,
wobei in der Trennwand (5) ein elektrisches Kontaktelement (8) angeordnet ist, welches eine zum ersten Raumbereich (6) zugewandte erste Anschlussstelle (9) zum Anschluss an eine gebäudeseitige Elektroinstallation, wie eine Netzstrominstallation und/oder eine Gebäudeleittechnikinstallation, aufweist, und welches eine zum zweiten Raumbereich (7) zugewandte zweite Anschlussstelle (10) aufweist, und
wobei in der Trennwand (5) eine Aufnahme (11) vorhanden ist, in welche ein weiteres elektrisches Kontaktelement (12) einsetzbar ist.

2. Elektrodose (1) nach Anspruch 1, **dadurch gekennzeichnet, dass** bei nicht eingesetztem weiteren elektrischen Kontaktelement (12) sich ein Wandabschnitt (13) über die Aufnahme (11) erstreckt, derart, dass sich die Trennwand (5) über die Aufnahme (11) fortsetzt.

3. Elektrodose (1) nach Anspruch 2, **dadurch gekennzeichnet, dass** der Wandabschnitt (13) als von der Aufnahme (11) heraustrennbarer Wandabschnitt (13) ausgebildet ist, derart, dass bei herausgetrenntem Wandabschnitt (13) die Aufnahme eine Durchgangsöffnung (14) bereitstellt, so dass das weitere elektrische Kontaktelement (12) durch die Durchgangsöffnung (14) sich durch die Trennwand (5) hindurch erstreckt.

4. Elektrodose (1) nach einem der vorhergehenden Ansprüche, **dadurch gekennzeichnet, dass** im zweiten Raumbereich (7) weiterhin mindestens ein Elektroelement (11) angeordnet ist, welches Elektroelement (11) eine elektrische Schnittstelle (12) aufweist, die mit der zweiten Anschlussstelle (10) des elektrischen Kontaktelementes (8) über eine Steckverbindung elektrisch verbindbar ist, und welches Elektroelement (11) über ein Leiterelement (27) mit einem Sanitärartikel verbindbar ist.

5. Elektrodose (1) nach einem der vorhergehenden Ansprüche, **dadurch gekennzeichnet, dass** der erste Raumbereich (6) durch mindestens eine Öffnung (15) zugänglich ist, derart, dass Versorgungskabel (22, 25) in den ersten Raumbereich (6) führbar sind.

6. Elektrodose (1) nach Anspruch 6, **dadurch gekennzeichnet, dass** jeweils zwei in der gleichen Seitenwand (16) benachbart zueinander liegende Öffnungen (15) ein Öffnungspaar bilden, wobei vorzugsweise in zwei bezüglich des ersten Raumbereichs (6) gegenüberliegenden Seitenwänden (16) je ein Öffnungspaar angeordnet ist.

7. Elektrodose (1) nach einem der vorhergehenden Ansprüche, **dadurch gekennzeichnet, dass** das Elektroelement (11) ein Netzteil, ein Transformator, eine Batterie, ein Kommunikationselement, ein mit der Gebäudeleittechnik zusammenarbeitendes Element oder ein Konverter ist.

8. Set umfassend eine Elektrodose nach einem der Ansprüche 1 bis 2 oder 4 bis 7, **dadurch gekennzeichnet, dass** die Elektrodose (1) zwei unterschiedliche Trennwände umfasst, wobei eine Trennwand eine Aufnahme für ein elektrisches Kontaktelement (8) aufweist und wobei die andere Trennwand zwei Aufnahmen für jeweils ein elektrisches Kontaktelement (8, 12) aufweist.

9. Verschaltungsanordnung umfassend eine Elektrodose nach einem der vorhergehenden Ansprüche 5 bis 8 und ein Elektrorohr, **dadurch gekennzeichnet, dass** eine der besagten Öffnungen (15) mit dem Elektrorohr in Verbindung steht, wobei das Elektrorohr vorzugsweise zu einem Dusch-WC führt.

10. Verschaltungsanordnung nach Anspruch 9, **dadurch gekennzeichnet, dass** die Öffnung neben der Öffnung mit dem Elektrorohr für die Zuführung eines 230-Volt-Kabels vorgesehen ist; und/oder dass die gegenüber dem Aufnahmeraum liegenden Öffnungen für die Zuführung eines Daten- und/oder eines Buskabels vorgesehen sind.

11. Sanitärinstallation (2) für einen Sanitärartikel, insbesondere ein WC oder Dusch-WC, umfassend:
- eine Elektrodose zur Stromversorgung des Sanitärartikels nach einem der vorhergehenden Ansprüche,
- einen Montagerahmen (28) und
- ein Elektrorohr
wobei die Elektrodose fest mit dem Montagerahmen in Verbindung steht und wobei das Elektrorohr in Einbaulage von der Elektrodose nach unten geführt wird, und derart liegt, dass das Elektrorohr einem am Montagerahmen zu befestigender Sanitärartikel, wie eine Toilettenschüssel, zuführbar ist.

12. Sanitärinstallation nach Anspruch 11, **dadurch gekennzeichnet, dass** die Sanitärinstallation weiterhin umfassend
- eine Spülrohr-Aufnahme zur Aufnahme eines Spülrohrs (35) zum Zuleiten von Spülwasser in den Sanitärartikel;
- ein Befestigungsmittel (36) zur Aufnahme und Befestigung eines Abflussrohrs (31) zum Ableiten von Abwasser aus dem Sanitärartikel am Montagerahmen (28); und
- mindestens eine erste und eine zweite Befestigungseinrichtung (41) zur Befestigung des Sanitärartikels am Montagerahmen (28) umfasst,
wobei die Spülrohr-Aufnahme, das Befestigungsmittel (36) sowie die erste und zweite Befestigungseinrichtung (41) einen Zwischenraum (Z) definieren,
wobei die Elektrodose (4) im Zwischenraum (Z) angeordnet ist, und
wobei das besagte Elektrorohr seitlich neben dem Zwischenraum (Z) nach unten geführt wird.

13. Sanitärinstallation (2) nach Anspruch 12, **dadurch gekennzeichnet, dass** der Zwischenraum (Z) durch zwei senkrechte Ebenen, welche senkrecht durch die erste beziehungsweise zweite Befestigungseinrichtung (41) verlaufen, und durch zwei horizontale Ebenen, welche horizontal durch die Spülrohr-Aufnahme beziehungsweise das Befestigungsmittel (40) verlaufen, definiert ist, wobei der Zwischenraum (Z) vorzugsweise derart angeordnet ist, dass er im Einbauzustand des Montagerahmens (28) frei zugänglich ist, und wobei der Zwischenraum (Z) im Einbauzustand, im Falle eines mit dem Montagerahmen (1) verbundenen Sanitärartikels, vorzugsweise durch den Sanitärartikel überdeckt wird.
